# EUROPÄISCHE PATENTANMELDUNG

(11) **EP 0 565 889 A1**
(43) Veröffentlichungstag der Anmeldung: **20.10.1993**
(21) Anmeldenummer: 93104323.6
(22) Anmeldetag: 17.03.1993
(51) Int. Cl.: A61C 5/00

(54) **Verstärkungselement**

(30) Priorität: 24.03.1992 DE 9203950 U
(71) Anmelder: Lasch, Uwe, Dr., D-72458 Albstadt (DE)
(72) Erfinder: Lasch, Uwe, Dr., D-72458 Albstadt (DE)

(57) **Zusammenfassung**

Um auch mit relativen weichen Füllmaterialien bzw. -massen eine lange Gebrauchsdauer von Füllungen in Hohlräumen (13) menschlicher oder tierischer (1c) Zähne zu erreichen, wird in die Füllmasse (15) ein Verstärkungselement (14,17,18) in Form eines abgewinkelten Bügels eingelegt, der Verklammerungselemente für die ihn umgebende Füllmasse aufweist. Der Bügel kann aus Edelstahl und/oder Kunststoff bestehen und weist vorzugsweise eine L- oder U-förmige Gestalt auf, um eine gute Anpassung an die Kontur des wiederherzustellenden Zahns sicherzustellen.

## Beschreibung

Die Erfindung betrifft ein Verstärkungselement zur Einlage in auszufüllende Hohlräume menschlicher oder tierischer Zähne.

In der Zahnmedizin tritt häufig das Problem auf, daß krankhafte Bereiche des Zahnes durch Ausbohren oder in sonstiger Weise entfernt werden müssen, um einer weiteren Erkrankung des Zahns vorzubeugen. Die dabei einstehenden Löcher oder Ausnehmungen in dem Zahn, sogenannte Kavitäten, müssen anschließend wieder aufgefüllt werden, um die Funktion des Zahns sicherzustellen.

Seit langer Zeit ist als Füllmaterial Amalgam, eine Legierung aus Silber und Quecksilber oder anderen Metallen, bekannt. Jedoch sind in neuerer Zeit Bedenken laut geworden, daß Amalgam aufgrund seines Quecksilbergehaltes in Laufe der Zeit eventuell schädliche Auswirkungen auf die Gesundheit der entsprechend behandelten Person mit sich bringen könnte. Es ist deshalb versucht worden, alternative Füllstoffe zu finden. Als eine praktikable Möglichkeit hat sich ein mit Glaskügelchen durchsetztes Kunststoffmaterial herausgestellt, das in Fachkreisen unter dem Begriff Composite bekannt ist. Die Glaskügelchen dienen als Verstärkungselemente für den Kunststoff, der eine geringe Abriebfestigkeit aufweist. Jedoch hat sich gezeigt, daß Zahnfüllungen mit einem derartigen Kunststoffmaterial aufgrund der beim Kauvorgang auftretenden häufigen Wechselbelastungen in relativ kurzer Zeit einem Ermüdungsbruch und einer Verformung unterliegen, wodurch die Füllung untauglich wird und erneuert werden muß. Zahnfüllungen aus Composite stellen somit aufgrund ihrer relativ kurzen Gebrauchsdauer unter Belastung zumindest zur Zeit keine tatsächliche Alternative zu Amalgamfüllungen dar.

Der Erfindung liegt die Aufgabe zugrunde, ein Verstärkungselement zur Einlage in auszufüllende Hohlräume menschlicher oder tierischer Zähne zu schaffen, mit dem auch für relative weiche Füllmaterialien eine lange Gebrauchsdauer erreicht werden kann.

Diese Aufgabe wird erfindungsgemäß dadurch gelöst, daß das Verstärkungselement von einem abgewinkelten Bügel gebildet ist, der Verklammerungselemente für die ihn umgebende Füllmasse aufweist.

Der Bügel wird in die Kavität derart eingesetzt, daß er unterhalb der später auszubildenen Oberfläche des Zahnes verläuft. Die Verklammerungselemente gewährleisten dabei einen guten Verbund mit dem den Bügel vollständig umgebenen und einbettenden Füllmaterial, beispielsweise einer Kunststoffmasse. Die auf den Zahn und insbesondere die Kunststoffmasse beim Kauvorgang einwirkenden Kräfte werden in den Bügel eingeleitet und von diesem entweder über innere Spannungen aufgenommen oder durch Anlage an einen Teil des ursprünglichen Zahn in diesen abgeleitet. Es hat sich gezeigt, daß auch trotz intensiver Wechselbelastungen selbst bei der Verwendung von relativ weichem Kunststoff-Füllmaterial kein Ermündungsbruch aufgetritt.

Der Bügel kann als Endlos-Bandmaterial hergestellt werden, wobei je nach Bedarf ein Teilstück gewünschter Länge abgelängt und in die gewünschte Form gebogen wird. Alternativ dazu ist es jedoch auch möglich, den Bügel als solchen vorzufertigen und in verschiedenen Größen auf Vorrat zu halten.

In bevorzugter Ausgestaltung der Erfindung ist vorgesehen, daß der Bügel einen in Längsrichtung verlaufenden Mittelsteg aufweist, an den beidseitig quer auskragende Vorsprünge angeschlossen sind. Der Mittelsteg dient dabei neben dem Zusammenhalt des Bügels im wesentlichen der Aufnahme der eingeleiteten Kräfte, während die Vorsprünge einen guten Verbund mit dem Füllmaterial und somit eine zuverlässige Lasteinleitung von dem Füllmaterial in den Bügel gewährleisten.

Ein einfache und kostengünstige Herstellung des Bügels kann erreicht werden, wenn die Vorsprünge mit dem Mittelsteg einstückig ausgebildet sind. Darüber hinaus können die Festigkeitseigenschaften des Bügels auf diese Weise relativ genau bestimmt und mit hoher Zuverlässigkeit reproduziert werden. Für einen gleichmäßigen Verbund mit dem Füllmaterial und insbesondere eine gleichmäßige Krafteinleitung hat es sich als vorteilhaft erwiesen, daß die Vorsprünge symmetrisch zu dem Mittelsteg ausgebildet sind. Desweiteren ist auf diese Weise die Herstellung des Bügels vereinfacht.

Der Bügel kann auf verschiedene Weise hergestellt werden, wobei insbesondere als Herstellungsverfahren das Gießen, Spritzgießen, Stanzen oder Strangpressen zu erwähnen sind.

In einer weiteren bevorzugten Ausgestaltung der Erfindung ist vorgesehen, daß der Bügel von einem flachen Bandmaterial gebildet ist, in dem Löcher ausgebildet sind. Nachdem Einsetzen des Bügels und dem Auffüllen der Kavität mit dem Füllmaterial dringt dieses in die Löcher ein und durchgreift diese, so daß der Bügel fest in dem Füllmaterial eingebettet ist. Für eine gleichmäßige Kraftübertragung bzw. -einleitung ist es sinnvoll, die Löcher nach einem gewissen Muster bzw. Raster anzuordnen.

Es ist dehalb erfindungsgemäß vorgesehen, daß die Löcher in zumindest zwei in Längsrichtung verlaufenden Reihen angeordnet sind. Um dabei auch über die Länge des Bügels eine annähernd gleichverteilte Lastübertragung zu erreichen, sollten die Löcher in benachbarten Reihen vorzugsweise um den halben Lochabstand versetzt zueinander angeordnet sein.

Gemäß einer weiteren Ausführungsform der Erfindung ist vorgesehen, daß der Bügel mehrere in Längsrichtung verlaufende Drähte aufweist, die mittels quer verlaufender Stege miteinander verbunden sind. Auf diese Weise kann die Festigkeit des Bügels durch geeignete Wahl der Anzahl der Drähte und/oder der Stege in relativ weiten Grenzen variiert und an den jeweiligen Verwendungszweck in einfacher Weise angepaßt werden. Aufgrund der orthogonalen Anordnung von Drähten und Stegen sind zwischen den Drähten und den Stegen im wesentlichen rechteckige Durchlässe gebildet, die eine vollständige und feste Einbettung des Bügels in dem Füllmaterial gewährleisten

In bevorzugter Ausgestaltung der Erfindung ist vorgesehen, daß daß die Stege seitlich über die äußeren Drähte vorstehen. Auf diese Weise bilden die vorstehenden Bereiche zusätzliche, frei auskragende Verklammerungselemenete, die die Einbettung und Kraftüberleitung zusätzlich verbessern.

Der erfindungsgemäße Bügel soll in dem aufzufüllenden Bereich des Zahns unterhalb von dessen Oberfläche verlaufen und deren Kontur möglichst folgen. Wenn die Kavität neben einem Bereich der Oberseite des Zahns auch einen Bereich einer Seitenfläche umfaßt, ist es sinnvoll, daß der Bügel eine im wesentlichen L-förmige Gestalt aufweist, so daß er die Kavität vollständig durchläuft.

Da der mittlere Bereich der Oberseite des Zahns üblicherweise etwas tiefer als dessen Randbereiche auf der Oberseite liegt, hat es sich als vorteilhaft erwiesen, daß die Schenkel des L-förmigen Bügels zwischen sich einen Winkel von etwa 80° einschließen, jedoch sind auch 90°-Winkel oder andere Winkel kleiner als 90° möglich.

Wenn die Kavität die Bereiche zweier entgegengesetzter Seitenflächen umfaßt, kann vorgesehen sein, daß der Bügel eine im wesentlichen U-förmige Gestalt aufweist. Auch dabei sollten aneinander anschließende Schenkel des U-förmigen Bügels zwischen sich einen Winkel von etwa 80° einschließen, wobei der mittlere Schenkel im wesentlichen horizontal verläuft. Die beiden seitlichen Schenkel des U-förmigen Bügels verlaufen somit im wesentlichen aufeinander zu. Der mittlere Schenkel kann auch einsinnig gekrümmt sein, um dem tieferliegenden Bereich der Oberseite des Zahns folgen zu können.

Der Bügel muß aus einem Material bestehen, daß ungiftig und mundbeständig ist. Vorteilhafterweise besteht der Bügel deshalb aus Edelstahl und/oder aus Kunststoff. Edelstahl wird bereits für Zahnprothesen verwendet und es liegen über dieses Material ausreichende Erkenntnisse bezüglich der Wirkung auf den menschlichen Körper vor. Darüber hinaus ist Edelstahl relativ kostengünstig sowie einfach und genau zu verarbeiten.

Zur Verbesserung der Verarbeitbarkeit sowie der Erhöhung der Verbindung zwischen dem Bügel und der umgebenden Füllmasse kann der Bügel mit einem Überzug versehen sein. Dieser Überzug kann aus Kunststoff bestehen, vorzugsweise sollte der Bügel jedoch mit Keramik überzogen ist.

Der Kunststoffüberzug kann auf den Bügel aufgepinselt, aufgesprüht oder in sonstiger Weise aufgebracht werden, woraufhin er in bevorzugter Ausgestaltung der Erfindung mittels Licht gehärtet werden kann.

Auch der Keramiküberzug wird auf den Bügel aufgepinselt, aufgesprüht oder in sonstiger Weise aufgebracht und anschließend bei einer Temperatur von vorzugsweise ca. 1000°C aufgebrannt. Ein Keramiküberzug weist den Vorteil einer einfachen Herstellung auf. Darüber hinaus kann der Keramiküberzug in gleichmäßiger geringer Auflagendicke aufgebracht werden und gewährleistet eine harte Oberfläche nach im Laufe der Zeit eintretender übermäßiger Abrasion des Füllmaterials.

Eine feste Verbindung zwischen der Keramikoberfläche und dem Füllmaterial, d.h. dem Composite kann erreicht werden, wenn auf die Keramikoberfläche ein Haftvermittler aufgebracht wird.

Weitere Ziele und Merkmale der Erfindung werden aus der folgenden Beschreibung einiger bevorzugter Ausführungsbeispiele unter Bezugnahme auf die beigefügten Zeichnungen ersichtlich. Es zeigen:
Fig. 1 einen teilweise geschnitten dargestellten Zahn mit eingesetztem Verstärkungselement gemäß der Erfindung,
Fig. 2 eine vergrößterte abgewickelte Darstellung des erfindungsgemäßen Bügels gemäß einer ersten Ausführungsform,
Fig. 3 eine vergrößterte abgewickelte Darstellung des erfindungsgemäßen Bügels gemäß einer zweiten Ausführungsform und
Fig. 4 eine vergrößterte abgewickelte Darstellung des erfindungsgemäßen Bügels gemäß einer dritten Ausführungsform.

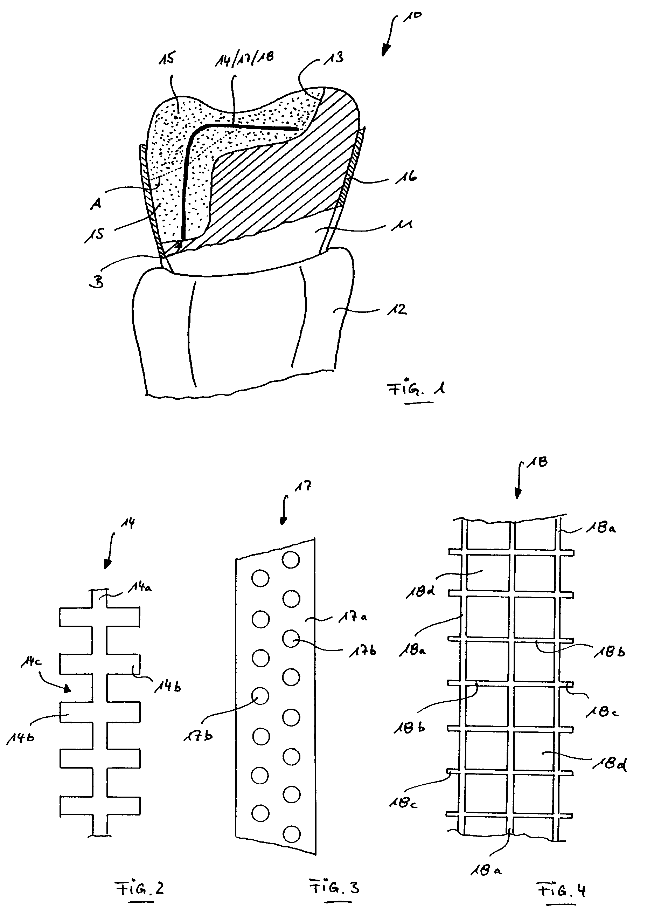

Gemäß Fig. 1 ist ein menschlicher Zahn 10 im Kiefer bzw. Zahnfleisch 12 gehalten. Um krankhafte Bereiche des Zahns 10 zu entfernen, ist in dem Zahn 10 in bekannter Weise eine Kavität 13 ausgebildet, die eine im wesentlichen L-förmige Gestalt aufweist. In die Kavität 13 ist ein als Verstärkungselement dienender Bügel 14/17/18 eingesetzt, der in seiner Form der Kontur der Kavität 13 folgt und somit in etwa parallel zu der Oberfläche des wiederhergestellten Zahns 10 verläuft. Der Bügel 14/17/18 weist in Fig. 1 nicht dargestellte Verklammerungselemente auf, durch die er in der ihn umgebenden Füllmasse 15 sicher positioniert ist.

In Fig. 2 ist ein Bügel 14 gemäß einem ersten Ausführungsbeispiel dargestellt. Der aus Edelstahl und/oder Kunststoff bestehende Bügel 14 weist einen in Längsrichtung verlaufenden Mittelsteg 14a auf, an den beidseitig quer unter einem rechten Winkel auskragende Vorsprünge 14b angeschlossen bzw. einstückig angeformt sind. Die Vorsprünge 14b sind symmetrisch zu dem Mittelsteg 14a angeordnet, wobei ihre Kraglänge etwa der doppelten Mittelstegbreite entspricht. Der gegenseitige Abstand zweier in Längsrichtung hintereinander liegender Vorsprünge 14b entspricht im wesentlichen der Kraglänge, so daß in etwa quadratische Zwischenräume 14c gebildet sind, die durch den Mittelsteg 14a sowie zwei in Längsrichtung hintereinander liegende Vorsprünge 14b begrenzt sind. Das Füllmaterial 15, üblicherweise ein Kunststoffmaterial, kann in die Zwischenräume 14c eindringen und auf diese Weise für eine sichere Positionierung des Bügels 14 sorgen.

In Fig. 3 ist ein Bügel 17 gemäß einem zweiten Ausführungsbeispiel dargestellt. Der ebenfalls aus Edelstahl und/oder Kunststoff bestehende Bügel 17 ist von einem flachen Bandmaterial 17a gebildet, in dem Löcher 17b ausgebildet sind. Die Löcher 17b sind in zwei in Längsrichtung verlaufenden Reihen angeordnet, wobei sie in den beiden Reihen um den halben Lochabstand zueinander versetzt sind. Das Füllmaterial 15 kann in die Löcher 17b eindringen und auf diese Weise für eine sichere Positionierung des Bügels 17 sorgen. Darüber hinaus erleichtern die Löcher 17b das Biegen bzw. Umformen des Bandmaterials zu dem abgewinkelten L- oder U-förmigen Bügel.

In Fig. 4 ist ein Bügel 18 gemäß einem dritten Ausführungsbeispiel dargestellt. Der Bügel 18 weist mehrere in Längsrichtung verlaufende Drähte 18a auf, die mittels unter einem rechten Winkel quer verlaufender Stege 18b miteinander verbunden sind. Auf diese Weise ist eine Art Drahtgitter bzw. Drahtmatte gebildet, wobei zwischen den Drähten 18a und den Stegen 18b im wesentlichen rechteckige Durchlässe 18d gebildet sind. Die Länge der Stege 18b ist größer als der Abstand zwischen den beiden außenliegenden Drähten 18a, so daß die Stege 18b seitlich über die äußeren Drähte 18a überstehen.

Das Füllmaterial 15 kann in die zwischen den Drähten 18a und den Stegen 18b gebildeten Zwischenräume 18d eindringen, wodurch der Bügel fest in das Füllmaterial eingebettet ist. Die seitlichen Überstände der Stege 18b unterstützen die Einbettung zusätzlich.

Anhand der Fig. 1 soll im folgenden erläutert werden, wie der Bügel in die auszufüllende Kavität des Zahns eingebracht wird.

Nachdem die Kavität 13 in bekannter Weise durch Bohren oder Schleifen ausgebildet wurde, wird sie nach Anordnen einer üblichen, den Zahnstumpf umspannenden Matrize 16 bis zu einer durch eine punktierte Linie A angedeutete Füllhöhe mit einem flexiblem Kunststoff-Füllmaterial 15 aufgefüllt. In dieses Füllmaterial 15 wird der L-förmige Bügel 14/17/18 derart eingesetzt, daß er in etwa der Kontur des wiederherzustellenden Zahns folgt. Wie Fig. 1 zeigt, verläuft der Bügel 14/17/18 in gewissem Abstand zu der späteren Oberfläche des Zahns 10 und liegt bevorzugterweise an seinem unteren Ende B am Boden der Kavität 13 auf dem ursprünglichen Zahnmaterial auf, wodurch die Kraftableitung günstig beeinflußt ist.

Nach der Positionierung des Bügels 14/17/18 wird das Füllmaterial 15, das bisher lediglich bis zur Linie A eingefüllt ist, üblicherweise mittels Licht gehärtet, wodurch der Bügel 14/17/18 sicher vorpositioniert ist. Daraufhin wird die Matrize 16 abgenommen und weiteres Füllmaterial 15 soweit aufgefüllt, daß der Bügel 14/17/18 vollständig überdeckt ist und die gewünschte Zahnkontur durch Modellieren angenähert werden kann.

Nach dem Aushärten diese Füllmaterials mittels Licht wird der Zahn in bekannter Weise nach- bzw. endbearbeitet. Der auf diese Weise gefüllte Zahn 10 kann aufgrund der Einbettung des Bügels auch hohe Wechselbeanspruchung sicher aufnehmen und ableiten, ohne daß ein Ermüdungsbruch auftritt.

## Patentansprüche

1. Verstärkungselement zur Einlage in auszufüllende Hohlräume menschlicher oder tierischer Zähne, dadurch gekennzeichnet, daß das Verstärkungselement von einem abgewinkelten Bügel (14; 17; 18) gebildet ist, der Verklammerungselemente (14b; 17b; 18c, 18d) für die ihn umgebende Füllmasse (15) aufweist.

2. Verstärkungselement nach Anspruch 1, dadurch gekennzeichnet, daß der Bügel (14) einen in Längsrichtung verlaufenden Mittelsteg (14a) aufweist, an den beidseitig quer auskragende Vorsprünge (14b) angeschlossen sind.

3. Verstärkungselement nach Anspruch 2, dadurch gekennzeichnet, daß die Vorsprünge (14b) mit dem Mittelsteg (14a) einstückig ausgebildet sind.

4. Verstärkungselement nach Anspruch 2 oder 3, dadurch gekennzeichnet, daß die Vorsprünge (14b) symmetrisch zu dem Mittelsteg (14a) ausgebildet sind.

5. Verstärkungselement nach Anspruch 1, dadurch gekennzeichnet, daß der Bügel (17) von einem flachen Bandmaterial (17a) gebildet ist, in dem Löcher (17b) ausgebildet sind.

6. Verstärkungselement nach Anspruch 5, dadurch gekennzeichnet, daß die Löcher (17b) in zumindest zwei in Längsrichtung verlaufenden Reihen angeordnet sind.

7. Verstärkungselement nach Anspruch 6, dadurch gekennzeichnet, daß daß die Löcher (17b) in benachbarten Reihen versetzt zueinander angeordnet sind.

8. Verstärkungselement nach Anspruch 1, dadurch gekennzeichnet, daß der Bügel (18) mehrere in Längsrichtung verlaufende Drähte (18a) aufweist, die mittels quer verlaufender Stege (18b) miteinander verbunden sind.

9. Verstärkungselement nach Anspruch 8, dadurch gekennzeichnet, daß zwischen den Drähten (18a) und den Stegen (18b) im wesentlichen rechteckige Durchlässe (18d) gebildet sind.

10. Verstärkungselement nach Anspruch 8 oder 9, dadurch gekennzeichnet, daß daß die Stege (18b) seitlich über die äußeren Drähte (18a) vorstehen.

11. Verstärkungselement nach einem der Ansprüche 1 bis 10, dadurch gekennzeichnet, daß der Bügel (14; 17; 18) eine im wesentlichen L-förmige Gestalt aufweist.

12. Verstärkungselement nach Anspruch 11, dadurch gekennzeichnet, daß die Schenkel des L-förmigen Bügels (14; 17; 18) zwischen sich einen Winkel von etwa 80° einschließen.

13. Verstärkungselement nach einem der Ansprüche 1 bis 10, dadurch gekennzeichnet, daß der Bügel eine im wesentlichen U-förmige Gestalt aufweist.

14. Verstärkungselement nach Anspruch 13, dadurch gekennzeichnet, daß aneinander anschließende Schenkel des U-förmigen Bügels zwischen sich einen Winkel von etwa 80° einschließen.

15. Verstärkungselement nach einem der Ansprüche 1 bis 14, dadurch gekennzeichnet, daß der Bügel (14; 17; 18) aus Edelstahl besteht.

16. Verstärkungselement nach einem der Ansprüche 1 bis 14, dadurch gekennzeichnet, daß der Bügel (14; 17; 18) aus Kunststoff besteht.

17. Verstärkungselement nach einem der Ansprüche 1 bis 16, dadurch gekennzeichnet, daß der Bügel (14; 17; 18) mit Kunststoff überzogen ist.

18. Verstärkungselement nach einem der Ansprüche 1 bis 16, dadurch gekennzeichnet, daß der Bügel (14; 17; 18) mit Keramik überzogen ist.

19. Verstärkungselement nach Anspruch 18, dadurch gekennzeichnet, daß die Keramik bei einer Temperatur von vorzugsweise ca. 1000°C aufgebrannt ist.
